# EUROPEAN PATENT APPLICATION

(11) **EP 1 840 590 A1**
(43) Date of publication of application: **03.10.2007**
(21) Application number: 06290486.7
(22) Date of filing: 28.03.2006
(51) Int. Cl.: G01S 5/00, H04Q 7/22, G01C 21/20

(54) **Method for providing a mobile terminal with tidal information, associated terminal and system**

(71) Applicant: LG ELECTRONICS INC., Seoul (KR)
(72) Inventor: Richard, Gilles, 94210 La Varenne Saint Hilaire (FR)
(74) Representative: Le Forestier, Eric

(57) **Abstract**

The present invention relates to a method for providing a mobile terminal (100) with information relative to a geographical position of the terminal (100), the terminal comprising positioning means (152) adapted to geographically position the terminal.

The method comprises the steps of:
- providing position data by means of said positioning means, and
- providing the terminal with tidal information corresponding to the geographical position indicated by said position data.

The invention also relates to a terminal and a system in which the method is carried out.

## Description

### FIELD OF THE INVENTION

The present invention relates to a method for providing a mobile terminal with information related to a geographical position of the terminal, wherein the terminal comprises positioning means adapted to provide data indicative of the geographical position of the terminal.

The invention also relates to a terminal in which the method is carried out.

### BACKGROUND OF THE INVENTION

Nowadays, mobile terminals are more and more often provided with positioning means capable of providing information about the geographical position of the terminal.

Firstly however, if a person, who is on vacation close to the sea, wants to know what time the high-tide and low-tide are for the day at his location, he has to check this information in handbooks, on the Internet, or in local newspapers, etc.

Similarly, if a person, who is sailing, wants to have tide information for the nearest port, he has again to check this information in handbooks, on the Internet, or in local newspapers.

Although tide information is very important - for instance when trying to access ports, or when trying to sail from the ocean into rivers, due to the local hazards - , these checks are time-consuming and non convenient, especially when the person is either on a boat or walking close to the shore. On top of that, the information is not always customized to the person's geographical position.

Secondly, a sailor may want to have tidal current information.

A normal type of tidal current, in coastal bays and rivers, is called a "reversing current", and flows alternately in one direction and in the other: The direction of the current is the direction toward which the current is flowing and the speed of the current represent the strength of the current. For instance, a current which flows from north to south is called a "southerly current" and has a set of 180 degrees. A special tidal current is called a "hydraulic current". It occurs in most canals and in some passes. Differences in the times and heights of high water may cause a reversing strong water flow from one end of a canal to another.

As a consequence of heavy or poor rains, a river's tidal current predictions could change considerably. Set and drift may vary significantly over different parts of a harbour because of the differences in bathymetry - i.e. the depths of the water.

Yet a sailor, whose boat maximum speed is six knots or less for instance, may need to get into a canal only when the current is running into the canal. Otherwise, the sailor may be going only at the speed of one knot or less with respect to the ground. This is due to the fact that the water flow is running against the boat's displacement direction. Even worse, the boat can get stuck in the tidal current, even with the engine of the boat at full power. Many ocean inlets are difficult or dangerous to navigate when the current is strong, current to which wind and surf must be added.

Although small errors in a boat position are crucial, and although knowledge of predicted currents, particularly in reduced visibility, is important, most computer programs for tidal currents calculate the direction and speed of the current thanks to a nearest reference station and a selected sub-station. Sometimes the nearest sub-station may not be the appropriate one to use though, for instance when the station is on the opposite side of a spit of land, on a large island or downstream from the position of a sailor. As a result, the calculated direction and speed of the tidal current are not accurate enough and not customized on the person's location. Plus they are difficult to update in real-time.

### SUMMARY OF THE INVENTION

It is an object of the invention to mitigate at least one of the drawbacks of the prior art.

For this purpose, the present invention provides according to a first aspect a method for providing tidal information in a communication terminal, according to claim 1.

The dependent method claims recite advantageous but non limiting ways to perform the method of claim 1.

The invention also provides, according to a second aspect, a mobile terminal according to claim 14.

Preferred but non limiting aspects of this terminal are recited in the dependent terminal claims.

The invention has numerous advantages.

The invention allows providing a mobile terminal with tidal information, based on the terminal geographical position.

The precision of the positioning of the terminal is as good as a few meters.

The invention allows as well providing the terminal with tide information corresponding to a range of days.

The invention further allows providing the terminal with tide information corresponding to an area around the position of the terminal.

Tide information can be refreshed and given continuously, for slow and/or fast movements of the terminal.

The invention allows having accurate tidal current information, in real-time.

### BRIEF DESCRIPTION OF THE DRAWINGS

Other aspects, objects and advantages of the invention will be better apparent on reading the following description of the invention, made with reference to the accompanying drawings, in which:
- Figure 1 is a diagrammatic representation of a system comprising an embodiment of a terminal and a system according to the invention;
- Figures 2A and 2B are diagrams of the main steps performed by the method according to the invention - this diagram containing different alternatives which can be selected by a user to implement the invention;
- Figures 3 and 4 are diagrammatic representations of a positioning menu which can be displayed on a terminal according to Fig. 1;
- Figure 5 is a diagrammatic representation of a sub menu which can be displayed on a terminal according to Fig. 1;
- Figures 6A and 6B are diagrammatic representations of tide information which can be displayed on a terminal according to Fig. 1;
- Figure 7A and 7B are diagrammatic representations of prompts which can be displayed on a terminal according to Fig. 1;
- Figures 8A-8D are diagrammatic representations of tide information, corresponding to an area around the position of the terminal, which can be displayed on a terminal according to Fig. 1;
- Figures 9A-9D are diagrammatic representations of tide information, corresponding to a range of days, which can be displayed on a terminal according to Fig. 1;
- Figures 10 and 11 are diagrammatic representations of a positioning menu which can be displayed on a terminal according to Fig. 1;
- Figure 12 is a diagrammatic representation of tidal current information, corresponding to an area around the position of the terminal, which can be displayed on a terminal according to Fig. 1; and
- Figure 13 and 14 are diagrammatic representations of prompts which can be displayed on a terminal according to Fig. 1.

### DESCRIPTION OF PREFERRED EMBODIMENTS

It will preliminarily be noted that in all the figures, identical or similar elements or features are referred to with identical numerical references.

It should be noted as well that in the present description, "tidal information" refers to both "tide information" and "tidal current information".

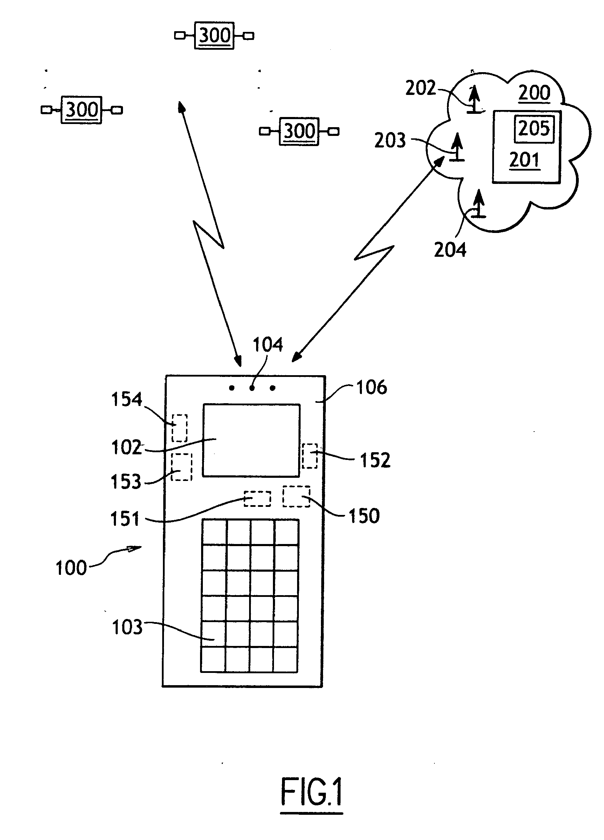

Figure 1 is a diagrammatic representation of a system comprising an embodiment of a terminal 100 and a mobile communication network 200 for implementing a method according to the invention.

Preferably, the network 200 is a 2G (Generation)/2.5G/3G network, comprising a server 201.

The terminal 100 comprises a housing 106, display means 102, input means 103, a memory 151 and processing means 150. The terminal 100 also comprises ringing means 104 for indicating incoming calls and positioning means 152 adapted to provide data indicating the geographical position of the terminal 100 via measurement means 153, the latter being also comprised in the terminal 100.

The terminal 100 is to advantage a handset for a telephony network, and more precisely a mobile phone, but can be any type of terminal of a mobile communication network, such as a personal digital assistant, etc.

In figure 1, the terminal is a bar type handset, but could be of any type, such as a clam type handset.

The display means 102 form to advantage a LCD screen, but can be of any type of screen, such as a plasma screen.

The input means 103 preferably comprises a keyboard, but can also comprise a touch pad, joysticks, rolls and/or scrolls. The input means 103 allow the user to perform all the selection steps and information input steps described in further details below.

The ringing means 104 can comprise a speaker and/or a vibrator.

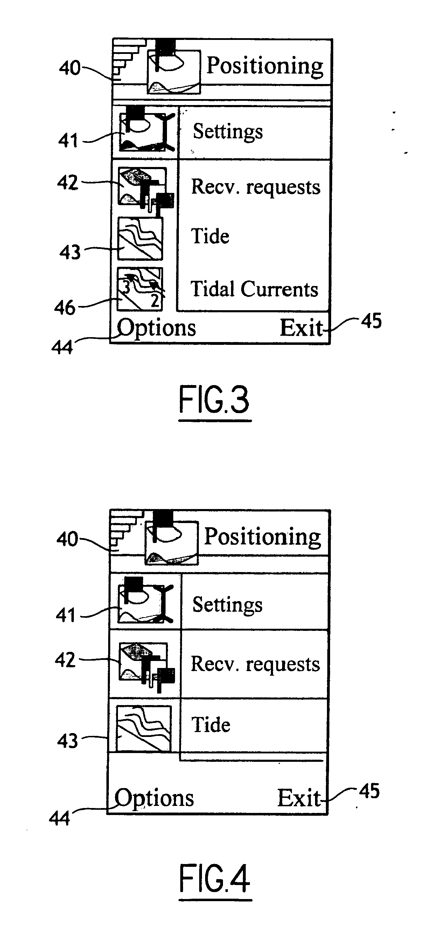

The memory 151 stores menu and option programs which can be interacted with by means of the display means 102, as shown in Figures 3-10D. The memory can also store a calendar.

The processing means 150 comprise means for the management of the communications between the terminal 100 and the communication network 200, such as calls, exchanges of SMS (Short Messaging Service) and/or MMS (Multimedia Messaging Service) messages, WAP (Wireless Application Protocol) connections, streaming video, etc.

Two main possible embodiments for the positioning means 152 will be described.

In the first embodiment, the positioning means 152 comprise means for calculating the geographical position of the terminal based on measurements data received by the measurement means 153 of the terminal. The position comprises the latitude and the longitude of the terminal.

In the first embodiment, the measurement means 153 can comprise a navigation satellite signal receiver, which can measure signals coming from navigation satellites 300, as shown in Figure 1. The navigation satellites 300 can be of any type, and belong to the GPS (Global Positioning System) and/or A-GPS (Assisted Global Positioning System), and/or Galileo and/or Glossnas systems for example. The positioning is based on the triangulation by the positioning means 152 of the signals received by the terminal 100 from the satellites 300.

In a variant of the first embodiment, the measurement means 153 can comprise a base transceiver station signal receiver, which can measure signals coming from base transceiver stations 202, 203 and/or 204 of the network 200, as shown in Figure 1. The base transceiver stations 202, 203 and 204 are mainly used for the calls, exchanges of SMS (Short Messaging Service) and/or MMS (Multimedia Messaging Service) messages, WAP (Wireless Application Protocol) connections, streaming video for instance, but can be as well used for positioning the terminal 100. The positioning is based on the triangulation by the positioning means 152 of the signals received by the terminal 100 from the base transceiver stations 202, 203 and/or 204. Several techniques can be used for the positioning, such as the Time of Arrival (TOA), Phase of Arrival (POA), Strength of Arrival (SOA), Frequency of Arrival (FOA), Time Difference of Arrival (TDOA), Phase Difference of Arrival (PDOA), Frequency Difference of Arrival (FDOA) or any combination.

The positioning means 152 are also adapted to transmit position data indicating the position of the terminal 100 to a server 201 of the network 200, once the position is calculated.

In the second embodiment, the positioning means 152 are adapted to transmit measurements data received by the measurement means 153 of the terminal to the server 201 of the network, so as to enable said server 201 to calculate the geographical coordinates of the terminal in the network. For this purpose, the server 201 comprises calculation means 205 for calculating the position coordinates of the terminal 100.

In this second embodiment, the measurement means 153 comprises, like in the first embodiment, a navigation satellite signal receiver or a base transceiver station signal receiver. The measurements can therefore be signals from the navigation satellites 300 or from the base transceiver stations 202, 203 and/or 204 of the network 200. The calculations made in the calculation means can use several techniques, such as the GPS, A-GPS, Galileo, Glossnas techniques or TOA, POA, SOA, FOA, TDOA, PDOA, FDOA, Observed Time Difference (OTD), Enhanced Observed Time Difference (EOTD) or any combination.

As will be better apparent from the following description, once the position of the terminal is calculated and available in the server, the server 201 transmits tidal information to the terminal 100, preferably to tidal information reception means 154 of the terminal 100.

Practically, the position means 152, the tidal information reception means 154 and the measuring means 153 are at least partially implemented in the processing means 150 and memory 151.

### TIDE INFORMATION

It will be described here-below an example where tidal information is tide information.

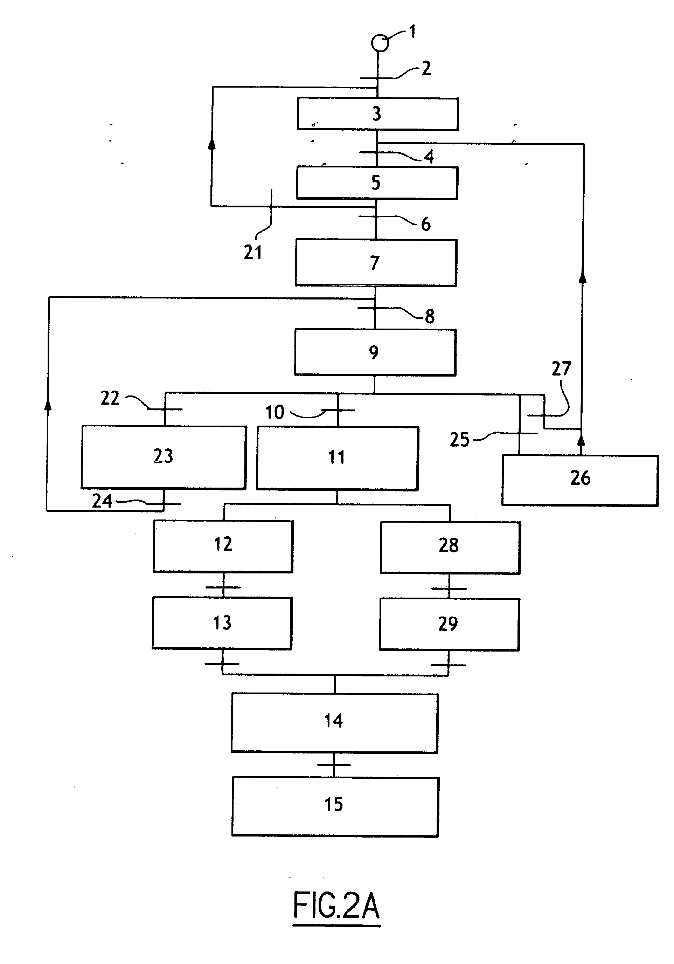

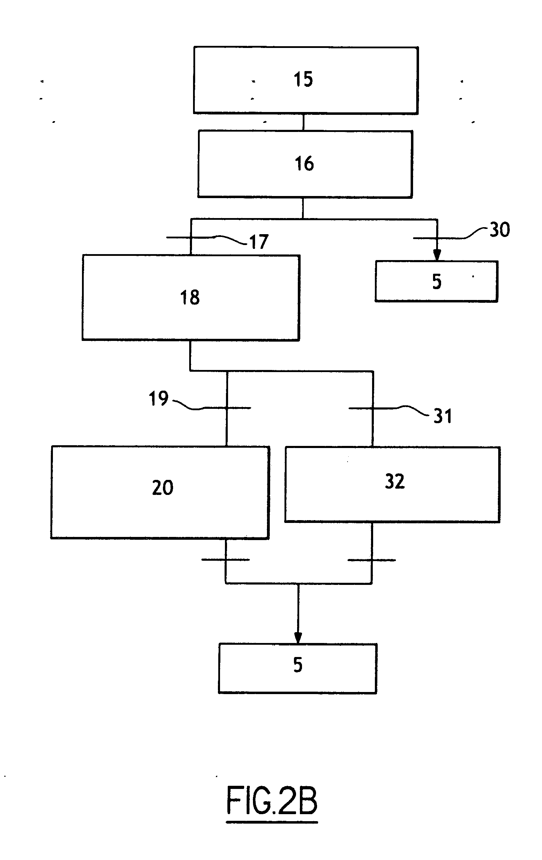

Figures 2A and 2B are diagrams of the main steps performed according to a method of the invention.

In step 1, the terminal 100 displays an idle screen on the display means 102.

In step 2, the user of the terminal 100 activates the input means 103 to launch an activation application, and to display, in step 3, a menu screen on the display means 102. The activation can be a stroke on a specific key for instance.

In step 4, the user of the terminal 1 activates the input means 103 to launch a positioning application, and to display, in step 5, a positioning menu 40 on the display means 102.

The screen showing the positioning menu 40, as displayed in step 5 on the display means 102, is shown in Figure 3.

The positioning menu 40 comprises different fields 41, 42, 43, 430, 44 and 45 for the displaying of choices for the user.

The field 46 is optional here and corresponds to tidal current information. It will be described further down in the specification.

The field 41 corresponds to settings of parameters, the field 42 corresponds to positioning requests and the field 43, named "tide" in Figure 3, corresponds to the tide-related requests.

The field 44, named "options" in Figure 3, can be selected with the input means 103 to access an option menu.

The field 45, named "exit" in Figure 3, can be selected in step 21 with the input means 103 to exit the menu 40, and go back to step 3 to show the previous screen on the display means 102.

In step 6, the user activates the input means 103 to highlight, in step 7, the tide field 43, as shown in Figure 4 (in Fig. 4, the field 46 is not represented to show that it is optional to get only tide information).

In step 8, the user activates the input means 103 to select the tide field 43.

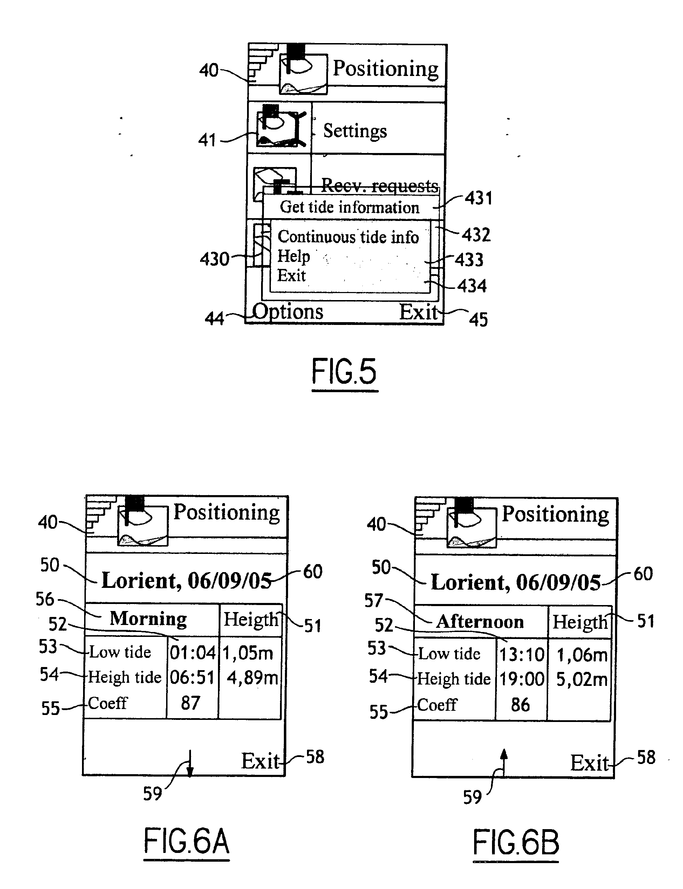

In step 9, the terminal 1 displays the tide sub menu 430. The screen showing the sub menu 430, as displayed on the display means 102, is shown in Figure 5.

The sub-menu 430 comprises different fields 431, 432, 433 and 434. The field 431 corresponds to a request for tide information, the field 432 corresponds to a request for continuous tide information, the field 433 corresponds to a request for help and the field 434 corresponds to a request for exit.

After step 9, steps 10, 22, 25 and 27 can be executed.

In step 22, the user activates the input means 103 to select the help field 433.

In step 23, the terminal displays the help program concerning tide information. In step 24, the user selects an exit option in the help program and step 8 as described above is performed.

In step 27, the user activates the input means 103 to select the exit field 434. Step 4 as described above is then performed.

In step 10, the user activates the input means 103 to select the request for tide information field 431.

In step 11, the positioning means 152 activate the geographical positioning of the terminal. Step 12 or 28 can be performed.

As already mentioned above, the position of the terminal can be calculated by the positioning means 152 themselves, in step 12, based on measurements from navigation satellites 300 and/or base transceiver stations 202, 203, 204. The position is then transmitted to the server 201 in step 13.

The position of the terminal can alternatively be calculated by calculation means 205 of the server 201, in step 29, based on measurement data from navigations satellites 300 and/or base transceiver stations 202, 203, 204 transmitted, in step 28 following step 11, by the positioning means 152.

In both cases, in step 14 following steps 13 and 29, the server 201 computes tide information based on the current day, and the position of the terminal 100.

In step 15, the server 201 transmits the computed tide information to the tidal information reception means 154.

The server 201 transmits the computed tide information to the tidal information reception means 154, through a SMS or MMS message, or an e-mail, or through a link to a WAP/web page that can be read by the user.

Figures 6A and 6B are diagrammatic representations of tide information which can be displayed on the terminal.

As can be seen in Figures 6A and 6B, tide information preferably comprises the place 50 - namely "Lorient" in Figures 6A and 6B - corresponding to the position of the terminal where tide information can be computed and sent to the terminal. The place 50 can correspond to the exact position of the terminal, but can also be the nearest place where a tide information can be computed and transmitted.

Tide information preferably also comprises the day date 60 and/or the coefficient of tide 55 and/or the times 52 and/or the heights 51 of the low tide 53 and/or of the high tide 54.

A field 59 showing an arrow indicates to the user the amount of information to be displayed. For instance, Figure 6A shows tide information for the morning 56. The downward arrow 59 shows that there is also information for the afternoon 57. Conversely, the upward arrow in Figure 6B shows that there is also information for the morning 56.

In step 25, following step 9 as described above, the user activates the input means 103 to select the continuous tide information field 432. With this request, in step 26, the terminal continuously displays tide information related to the position of the terminal. The determination of the position by the terminal or the server and the transmission of the tide information by the server 201, as already described, are refreshed according to an appropriate refresh frequency.

This option is chosen when the terminal is moved permanently along the coast area (for example coast guard terminals). The server 201 follows-up the movement of the terminal by transmitting the tide information via WAP push for instance, every five minutes, for 20-30 km for instance. With this option, appropriate information will be manually activated in urgent cases and indicated with an icon on the display means. An exit option can be selected to go back to step 4 already described.

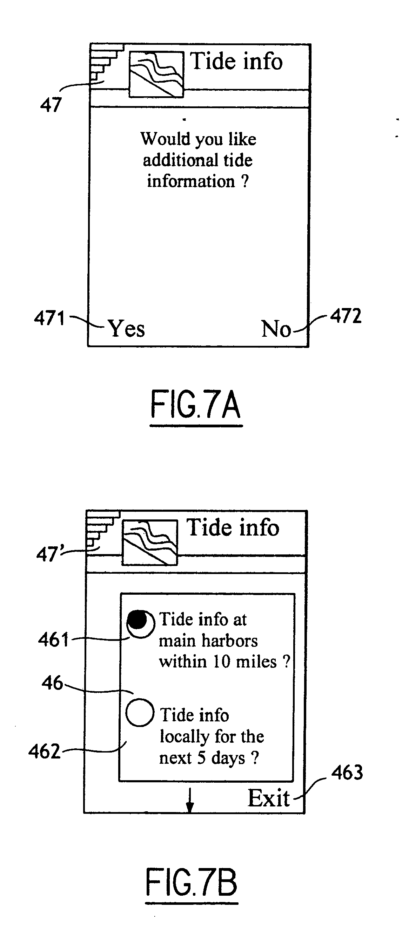

In step 16 following step 15, the server 201 causes the terminal to ask if the user wants additional tide information. An example of a prompt 47 asking the question is shown in Figure 7A. The prompt 47 comprises a "yes" field 471 and a "no" field 472. After step 16, steps 17 and 30 can be executed.

In step 30, the user activates the input means 103 to select the "no" request field 472. The above-described step 5 is then performed.

In step 17, the user activates the input means 103 to select the request for additional tide information field 471.

In step 18, the terminal displays a prompt asking if the user wants either tide information corresponding to a range of days or corresponding to an area around the position of the terminal. The range of days can be of five days for instance. The area around the position of the terminal can correspond to a radius of 15 or 20 km for instance, and be specific to harbours. Of course, these numerical examples are non-limiting.

An example of a prompt 47' is shown in Figure 7B. The prompt 47' comprises a main field 46 with a message and an exit field 463. The main field 46 is divided in a field 461 corresponding to tide information in the area, and a field 462 corresponding to tide information in the range of days.

After step 18, steps 19 or 31 can be executed.

In step 19, the user activates the input means 103 to select the request for additional tide information field 461.

In step 20, the terminal 1 displays the tide information transmitted by the server 201.

The server transmits the additional tide information to the tidal information reception means 154, through a SMS or MMS message, or an e-mail, or through a link to a WAR/web page that can be read by the user. From a practical point of view, additional information are preferably transmitted as SMS/MMS messages, so that the user can save it in the memory 151, and check the tide information later on.

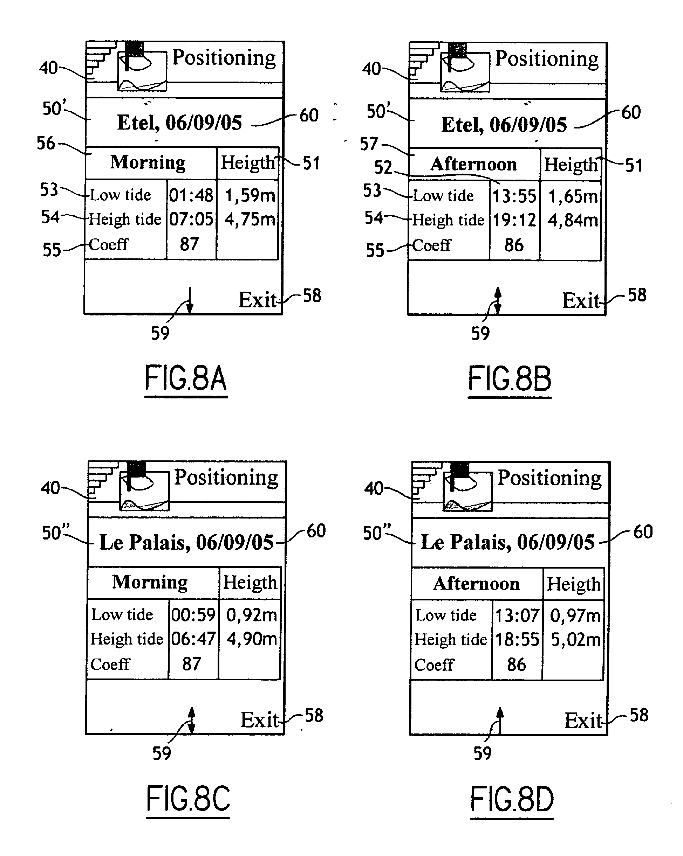

An example of additional tide information is shown in Figures 8A-8D. Tide information is therefore shown for a place 50' called "Etel" and a place 50" called "Le Palais", those places being harbours situated in the area of "Lorient".

In step 31, the user activates the input means 103 to select the request for additional tide information field 462.

In step 32, the terminal 1 displays the tide information received from the server 201.

As above, the server 201 transmits the additional tide information to the tidal information reception means 154, through a SMS or MMS message, or an e-mail, or through a link to a WAP/web page that can be read by the user. From a practical point of view, additional information are preferably transmitted as SMS/MMS messages, so that the user can save it in the memory 151, and check the tide information later on.

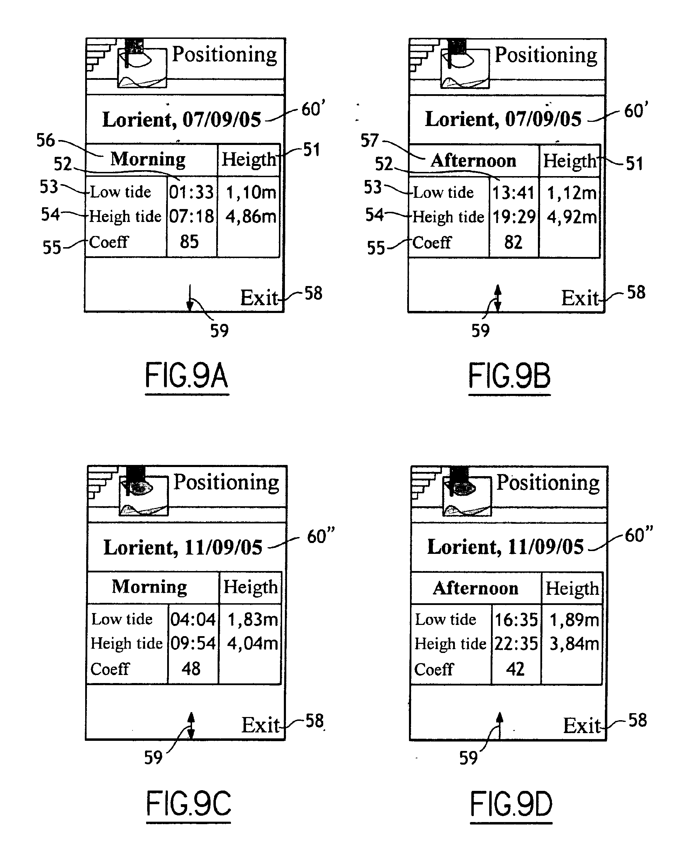

An example of additional tide information is shown in Figures 9A-9D. Tide information is therefore shown for the place 50 called "Lorient" corresponding to the position of the terminal, but for a range of dates, namely a date 60' corresponding to one day after the current date 60, up to a date 60" corresponding to five days after the current date.

Step 5 is performed after step 20 or 32.

Here-below are given some practical examples of the use of a terminal and a system performing a method according to the invention.

According to a first example, whenever a terminal user wants to plan his surfing sessions on the ocean for the next five days, he/she activates the positioning menu, and selects the "Tide" sub-menu. Then the user selects "Get tide information". Thanks to the GPS or the A-GPS for instance, the current longitude and latitude of the terminal are calculated by the terminal and transmitted to the server. The tide information for the current day at the current terminal position is provided to the terminal, through MMS for example. Then the terminal user is prompted if he/she wants tide information for the next five days. If the user wishes so, then the server transmits a MMS/SMS message for example, with a link to a WAP page where the user will have the tide information at the terminal current position, for the next five days. From a practical point of view, users may prefer to receive the additional information as MMS message, in order to be able to save it on the terminal, and check the tide information later on.

According to a second practical example, if a terminal user wants to go fishing at the ocean, from the shore, he/she activates the positioning menu, and selects the "Tide" sub-menu. Then the user selects "Get tide information". Thanks to Galileo localization service for instance, the current terminal longitude and latitude are calculated by the server. Tide information for the current day at the current terminal position is provided to the terminal, through MMS for example. Then the terminal user is prompted if he/she would like the tide information for the next five days. If the user wishes so, then the server transmits for example an additional MMS with the relevant tide information for the current handset position.

According to a third example, if a terminal user sails close to the coast, and needs to know the strength of the tide and its status before making manoeuvring decisions on the boat, he/she activates the positioning menu, and selects the "Tide" sub-menu. Then the user selects "Get tide information", and the position of the terminal is calculated. Tide information for the current day at the current terminal position is provided, through MMS for example. Then the terminal user is prompted if he/she would like the tide information at the main harbours within the next 15 km from the current position. If the user wishes so, then the server transmits an additional MMS with the relevant tide information for the main harbours within the specified range.

### TIDAL CURRENT INFORMATION

It will be described here-below an example where tidal information is tidal current information.

The main steps performed according to a method of the invention for tidal current information are similar to the main steps described with reference to the diagrams of Figures 2A and 2B. Therefore, the similar steps will not be described in detail. Only the main differences will be described, for clarity and conciseness reasons.

In a method where tidal current information is required by a user, steps similar so steps 1-5 of Figure 2A are processed.

A step similar to step 21 already described can also be processed after step 4.

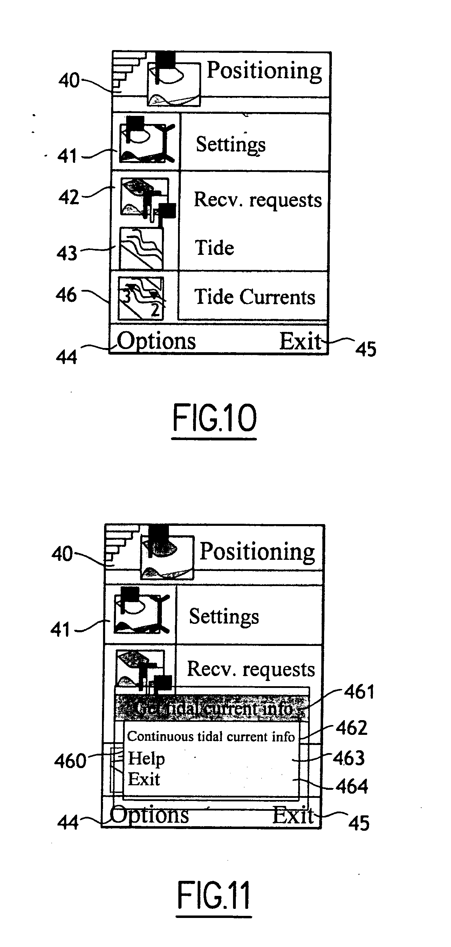

From the screen of Figure 3 showing the positioning menu 40, as displayed in step 5, steps 6 and 7 are processed so as to highlight the field 46, as shown in Figure 10. The field 46 corresponds to the tidal current information.

In step 8, the user activates the input means 103 to select the tidal current field 46.

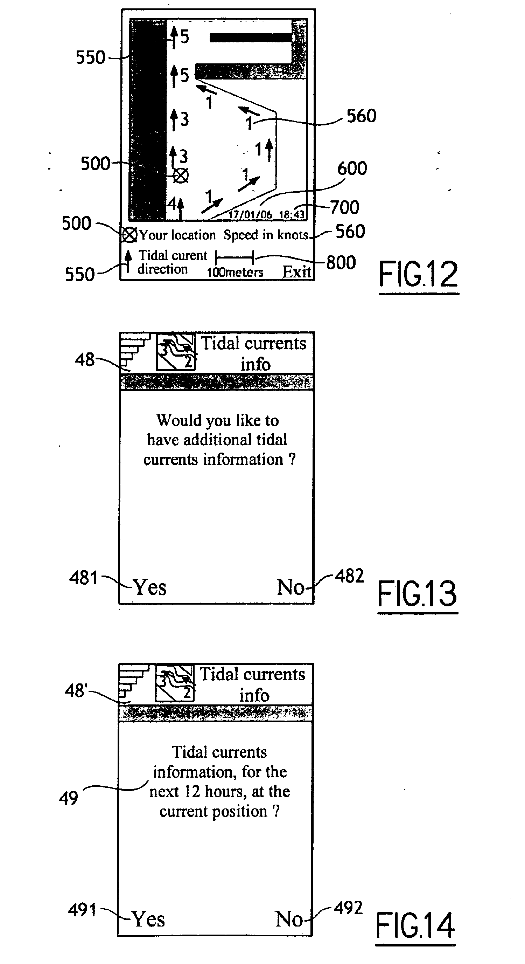

In step 9, the terminal 1 displays the tidal current sub menu 460. The screen showing the sub menu 460, as displayed on the display means 102, is shown in Figure 11.

The sub-menu 460 comprises different fields 461, 462, 463 and 464. The field 461 corresponds to a request for tidal current information, the field 462 corresponds to a request for continuous tidal current information, the field 463 corresponds to a request for help and the field 464 corresponds to a request for exit.

After step 9, steps 10, 22, 25 and 27 can be executed.

Steps 22-24 in the one hand and step 27 on the other hand are similar to the steps 22-24 and 27 already described.

In step 10, the user activates the input means 103 to select the request for tide information field 461.

Steps 11, 12-13 and 28-29 are similar to the steps 11, 12-13 and 28-29 already described.

In step 14 following steps 13 and 29, the server 201 computes tidal current information based on the current day or time, and the position of the terminal 100.

In step 15, the server 201 transmits the computed tidal current information to the tidal information reception means 154.

The server 201 transmits the computed tide information to the tidal information reception means 154, through a SMS or MMS message, or an e-mail, streaming video or through a link to a WAP/web page that can be read by the user.

Figure 12 shows an example of the way the tidal current information could be displayed on the terminal.

As can be seen in Figure 12, tidal current information preferably comprises position information 500 and/or date information 600 and/or time information 700 and/or tidal current direction information 550 and/or tidal current speed information 560 and/or a map scale 800.

The information can be displayed as a map of the area where the terminal is positioned, the tidal current having a colour different from the ocean colour, with signs/arrows 550 showing the tidal current direction, and with tidal current speed at some points 560 in the map area.

In step 25, following step 9 as described above, the user activates the input means 103 to select the continuous tidal current information field 462. With this request, in step 26, the terminal continuously displays and refreshes tidal current information related to the position of the terminal.

This option is chosen when the terminal is moved permanently along the coast area (for example coast guard terminals). As already disclosed, the server 201 follows-up the movement of the terminal by transmitting the tidal current information via WAP push for instance, every five minutes, for 20-30 km for instance. With this option, appropriate information will be manually activated in urgent cases and indicated with an icon on the display means. An exit option can be selected to go back to step 4 already described.

In step 16 following step 15, the server 201 causes the terminal to ask if the user wants additional tidal current information. An example of a prompt 48 asking the question is shown in Figure 13. The prompt 48 comprises a "yes" field 481 and a "no" field 482. After step 16, steps 17 and 30 can be executed.

In step 30, the user activates the input means 103 to select the "no" request field 482. The above-described step 5 is then performed.

In step 17, the user activates the input means 103 to select the request for additional tide information field 481.

In step 18, the terminal displays a prompt 48' asking if the user wants tidal currents information corresponding to a range of hours. The range of hours can be of twelve hours for instance. Of course, this numerical example is non-limiting.

An example of a prompt 48' is shown in Figure 14. The prompt 48' comprises a main field 49 with a message, a "yes" field 491 and an exit field 492.

After step 18, steps 19 or 31 can be executed.

In step 19, the user activates the input means 103 to select the request for additional tidal current information for the next twelve hours field 491.

In step 20, the terminal 1 displays the tide information transmitted by the server 201.

The server transmits the additional tidal current information for the next twelve hours to the tidal information reception means 154, through a SMS or MMS message, or an e-mail, or video - streaming or not - or through a link to a WAP/web page that can be read by the user. From a practical point of view, additional information are preferably transmitted as a map as shown in Figure 12, so that the user can save it in the memory 151, and check the tide information later on.

In step 31, the user activates the input means 103 to select the exit field 492. Step 32 is void in this embodiment.

Step 5 is performed after step 20 or 32.

Here-below are given some practical examples of the use of a terminal and a system performing a method according to the invention.

According to a first example, if a boat sailor wants to sail from the ocean coast into a river, he goes to the Positioning menu of his terminal, and selects the "Tidal currents" sub-menu. Then the user clicks on "Options" and "Get tidal currents information". Thanks to GPS or A-GPS, the current terminal longitude and latitude are calculated. The tidal current information for the current day, time and terminal position is provided to the terminal, through an MMS showing a map of the area with the tidal current information (arrows for its direction, and knots for the speed). Then the terminal user is prompted if he would like the tidal current information for the next twelve hours at the current terminal position. If the user wishes so, then the server sends for example a video to the terminal. The user can later play the video, showing a map of the area, with the tidal current information behaviour (direction and speed) changing over the twelve hour period.

According to a second example, if a boat sailor wants to park his boat in a harbour (which turns into a river) following heavy rains, he goes to the Positioning menu of his terminal, and selects the "Tidal currents" sub-menu. Then the user clicks on "Options" and "Get tidal currents information". Thanks to the Galileo system for example, the current terminal longitude and latitude are calculated. The tidal current information for the current day, time and terminal position is provided to the terminal, through a WAP link. The corresponding WAP pages show a map of the area with the tidal current information (arrows for its direction, and knots for the speed). This will help the sailor to manoeuvre the boat, as he will know the predicted tidal currents.

## Claims

1. A method for providing a mobile terminal (100) with information related to a geographical position of the terminal (100), wherein the terminal comprises positioning means (152) adapted to provide position data indicative of the geographical position of the terminal, the method comprising the steps of:
- providing position data by means of said positioning means, and
- providing the terminal with tidal information corresponding to the geographical position indicated by said position data.

2. A method according to claim 1, wherein the position data are coordinate data generated within the mobile terminal, and further comprising the step of transmitting said coordinate data to a remote server (201) containing said tidal information.

3. A method according to claim 1, wherein said position data are measurement data measured by measurement means (153) provided in the terminal.

4. A method according to claim 3 as dependent from claim 1, further comprising the step of transmitting said measurement data to a remote server (201) containing said tidal information, and calculating the position data at the server from said measurement data.

5. A method according to any one of claims 3 and 4, wherein said measurement data are signals from navigation satellites (300), and wherein said measurement means (153) comprise a navigation satellite signal receiver.

6. A method according to any one of claims 3 and 4, wherein said measurement data are signals from base transceiver stations (202, 203, 204) of a network (200) to which said mobile terminal is wirelessly connected, and the measurement means (153) comprise a base transceiver station (202, 203, 204) signal receiver.

7. A method according to any one of claims 1-6, wherein said tidal information comprises position information (50, 50', 50") and/or date information (60, 60', 60") and/or tide coefficient information (55) and/or high/low tide times (52) and/or high/low tide heights.

8. A method according to any one of claims 1-7, wherein said tidal information covers a range of days.

9. A method according to any one of claims 1-8, wherein said tidal information covers a geographical area around the position of the terminal (100).

10. A method according to any one of claims 1-6, wherein said tidal information comprises position information (500) and/or date information (600) and/or time information (700) and/or tidal current direction information (550) and/or tidal current speed information (560) and/or a map scale (800).

11. A method according to claim 10, wherein said tidal information covers a range of hours.

12. A method according to any one of claims 10-11, wherein said tidal information covers a geographical area around the position of the terminal (100).

13. A method according to any one of the preceding claims, comprising a step of periodically, refreshing tidal information.

14. A mobile terminal (100) comprising positioning means (152) adapted to provide position data indicative of the geographical position of the terminal, **characterized in that** it comprises reception means (154) adapted to receive tidal information corresponding to the geographical position indicated by said position data.

15. A terminal according to claim 14, wherein the position data are coordinate data generated within the mobile terminal, and further comprising means for transmitting said coordinate data to a remote server (201) containing said tidal information.

16. A terminal according to claim 14 or 15, wherein the position data are based on measurement data generated by measurement means (153) provided in the terminal.

17. A terminal according to claim 16 as dependent from claim 14, comprising means for transmitting said measurement data to a remote server as data from which position data can be calculated.

18. A terminal according to any of claims 16 and 17, wherein said measurement data are signals from navigation satellites (300), and wherein said measurement means (153) comprise a navigation satellite signal receiver.

19. A terminal according to any of claims 16 and 17, wherein said measurement data are signals from base transceiver stations (202, 203, 204) of a network (200) to which said mobile terminal is wirelessly connected, and the measurement means (153) comprise a base transceiver station (202, 203, 204) signal receiver.

20. A terminal according to any one of claims 14-19, wherein said tidal information comprises position information (50, 50', 50") and/or date information (60, 60', 60") and/or tide coefficient information (55) and/or high/low tide times (52) and/or high/low tide heights.

21. A terminal according to any one of claims 14-20, wherein said tidal information covers a range of days.

22. A terminal according to any one of claims 14-21, wherein said tidal information covers a geographical area around the position of the terminal (100).

23. A method according to any one of claims 14-19, wherein said tidal information comprises position information (500) and/or date information (600) and/or time information (700) and/or tidal current direction information (550) and/or tidal current speed information (560) and/or a map scale (800).

24. A method according to claim 23, wherein said tidal information covers a range of hours.

25. A method according to any one of claims 23-24, wherein said tidal information covers a geographical area around the position of the terminal (100).

26. A terminal according to any one of claims 14-25, comprising display means (102) adapted to display a tidal sub-menu (430, 460) in a positioning menu.
